# EUROPÄISCHE PATENTANMELDUNG

(11) **EP 0 788 253 A2**
(43) Veröffentlichungstag der Anmeldung: **06.08.1997**
(21) Anmeldenummer: 97400210.7
(22) Anmeldetag: 29.01.1997
(51) Int. Cl.: H04J 14/02

(54) **Optisches Übertragungssystem zur Reduzierung von Interferenzstörungen**

(30) Priorität: 31.01.1996 DE 19603403
(71) Anmelder: ALCATEL ALSTHOM COMPAGNIE GENERALE D'ELECTRICITE, 75008 Paris (FR)
(72) Erfinder: Junginger, Bernhard, 71229 Leonberg (DE); Selinger, Joachim F., 70563 Stuttgart (DE)
(74) Vertreter: Hellebrandt, Martin, Dipl.-Ing.

(57) **Zusammenfassung**

Es ist ein optisches Übertragungssystem angegeben, bei dem an ein Lichtwellenleiternetz (2) eine Zentrale (1) und Endstellen (3, 4) angeschlossen sind. Jede Endstelle (3, 4) hat einen Laser (5, 7) und eine damit verbunden Modulationseinrichtung (6, 8), um so optische Signale zur Zentrale (1) senden zu können. Jede Modulationseinrichtung (6, 8) steuert die Lichtquelle (5, 7) so, daß die Lichtquelle (5, 7) nur innerhalb von aufeinanderfolgenden ersten Zeitintervallen (T_{1L}, T_{2L}) Licht aussendet, die durch zweite Zeitintervalle (T_{1D}, T_{2D}) getrennt sind, und daß die ersten Zeitintervalle (T_{1L}, T_{2L}) kürzer als die zweiten Zeitintervalle (T_{1D}, T_{2D}) sind.

## Beschreibung

Die Erfindung betrifft ein optisches Übertragungssystem gemäß dem Oberbegriff des Patentanspruchs 1 und eine optische Sendeeinrichtung gemäß dem Oberbegriff des Patentanspruchs 2.

Ein optisches Übertragungssystem und eine optische Sendeeinrichtung sind z. 8. aus einer Veröffentlichung von T. H. Wood et al, "Operation of a Passive Optical Network with Subcarrier Multiplexing in the Presence of Optical Beat Interference", Journal of Lightwave Technology, Vol. 11, No. 10, October 1993, Seiten 1632 bis 1640 bekannt. Aus dieser Veröffentlichung ist außerdem bekannt, daß in optischen Übertragungssystem, in denen das Unterträgermultiplexverfahren angewendet wird, das Problem besteht, daß es in einer im optischen Übertragungssystem vorhandenen Zentrale (head end) unter ungünstigen Umständen zu störenden optischen Interferenzen kommen kann. Diese optischen Interferenzen verursachen in der Zentrale ein starkes Zusatzrauschen. Dieses Phänomen ist als "optical beat interference (OBI)" bekannt.

Die Erläuterung dieses Phänomens erfolgt anhand eines optischen Übertragungssystems, das als "fiber-in-the-loop (FITL) system" bekannt ist und aus einer Zentrale, einem Lichtwellenleiternetz (passive optical network, PON) und einer Anzahl von Endstellen (distant terminals) besteht. In jeder Endstelle ist ein Laser vorhanden, um Aufwärtssignale auszusenden. Diese von den einzelnen Endstellen zur Zentrale gesendeten Aufwärtssignale müssen in der Zentrale getrennt werden, um ausgewertet zu werden. In der Zentrale sind dafür ein Koppler, ein Photodetektor und frequenzselektive Mittel vorhanden. Es stehen drei Multiplexverfahren zur Verfügung, damit die Aufwärtssignale in der Zentrale getrennt werden können: das Wellenlängenmultiplex- (WDM), das Zeitmultiplex- (TDM) und das Unterträgermultiplexverfahren (SCM).

In optischen Übertragungssystemen, die das SCM-Verfahren anwenden, wird der in jeder Endstelle vorhandene Laser durch ein Modulationssignal moduliert, das eine für die jeweilige Endstelle charakteristische Trägerfrequenz hat. Dies hat den Vorteil, daß die Wellenlängen des von den Lasern ausgesendeten Lichts und die Sendezeitpunkte der einzelnen Endstellen nicht in dem Maße überwacht werden müssen, wie es beim WDM- und TDM-Verfahren der Fall wäre. Beim SCM-Verfahren besteht jedoch das genannte Problem der störenden optischen Interferenzen, die auftreten, wenn mindestens zwei Laser Licht der gleichen Wellenlänge aussenden. In der Veröffentlichung ist angegeben, daß die störenden optischen Interferenzen reduziert werden können, indem der Modulationsindex m eines jeden sinusförmigen Modulationssignals erhöht wird; es sind zwei Werte für den Modulationsindex m angegeben: m = 0,8 und m = 1,8. Dadurch wird das Spektrum des von einem Laser ausgesendeten Lichts verbreitert. Außerdem ist angegeben, daß durch andere das Spektrum verbreiternde Maßnahmen, z. B. durch die Spreizspektrum-(Spreadspectrum-) Technik, die störenden optischen Interferenzen ebenfalls reduziert werden können. Diese Maßnahmen erfordern jedoch einen hohen Aufwand.

Der Erfindung liegt die Aufgabe zugrunde, ein optisches Übertragungssystem anzugeben, bei dem die störenden optischen Interferenzen durch eine einen geringeren Aufwand verursachende Maßnahme reduziert sind. Ein diese Aufgabe lösendes optisches Übertragungssystem ist Gegenstand des Anspruchs 1. Außerdem liegt der Erfindung die Aufgabe zugrunde, eine optische Sendeeinrichtung für ein optisches Übertragungssystem anzugeben. Eine optische Sendeeinrichtung ist Gegenstand des Anspruchs 2. Vorteilhafte Ausgestaltungen der Erfindung sind in den Unteransprüchen angegeben.

Ein Vorteil der Erfindung ist, daß sich dadurch in der Zentrale das Signal-Rauschleistungsverhältnis bedeutend verbessert.

Die Erfindung wird im folgenden beispielhaft anhand von Zeichnungen näher erläutert. Es zeigen:
- Fig. 1: ein optisches Übertragungssystem mit einer Zentrale und zwei Endstellen, und
- Fig. 2: eine Darstellung von zwei Modulationssignalen als Funktion der Zeit.

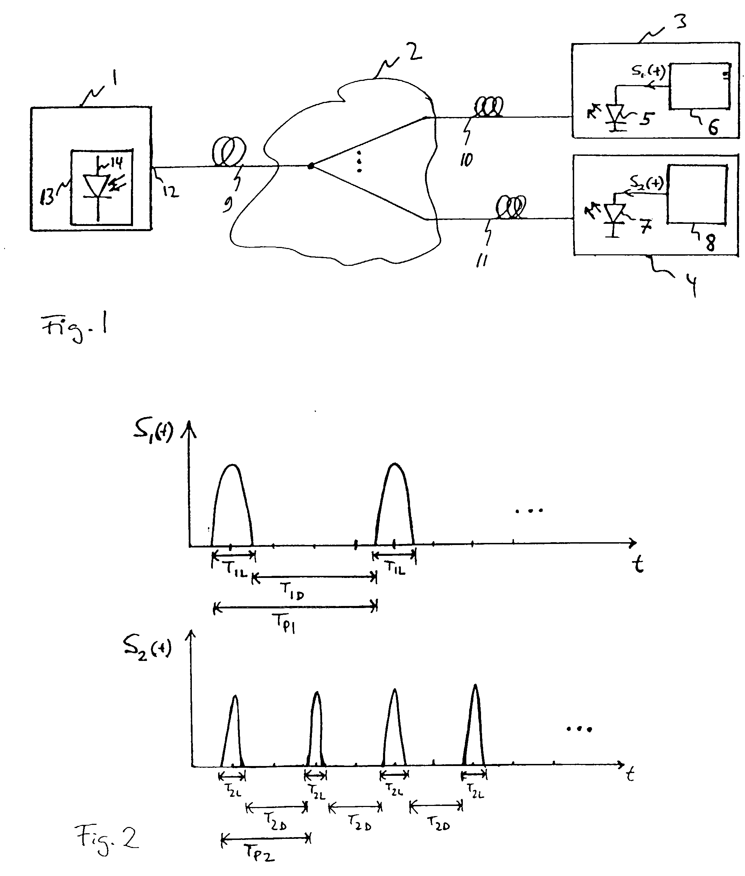

In Fig. 1 ist schematisch ein optisches Übertragungssystem mit einer Zentrale 1 und zwei Endstellen 3, 4 gezeigt. Die Zentrale 1 und die Endstellen 3, 4 sind an ein Lichtwellenleiternetz 2 angeschlossen. Das Lichtwellenleiternetz 2 besteht üblicherweise aus einer Vielzahl einzelner Lichtwellenleiterstrecken, die durch optische Verteiler und eventuell durch optische Verstärker miteinander verbunden sind, um so von der Zentrale 1 ausgesendetes Licht auf eine Vielzahl von Endstellen 3, 4 zu verteilen. Das ausgesendete Licht ist üblicherweise durch Nachrichtensignale moduliert, wodurch ein zu verteilendes optisches Signal entsteht. Bei dem in Fig. 1 gezeigten optischen Übertragungssystem ist ein Anschluß 12 der Zentrale 1 durch einen Lichtwellenleiter 9 mit dem Lichtwellenleiternetz 2 verbunden. Die Endsteile 3 ist durch einen Lichtwellenleiter 10 mit dem Lichtwellenleiternetz 2 verbunden und die Endstelle 4 durch einen Lichtwellenleiter 11. Die Lichtwellenleiter 9, 10, 11 sind Teil des Lichtwellenleiternetzes 2 und hier zur Verdeutlichung herausgezeichnet.

In der Zentrale 1 ist eine Einrichtung 13 vorhanden, um die von den Endstellen 3, 4 ausgesendeten optischen Signale zu empfangen. In die Einrichtung 13 ist zur Verdeutlichung, daß optische Signale empfangen werden, ein Photodetektor 14 eingezeichnet, der die optischen Signale in elektrische Signale wandelt. Die in der Zentrale 1 ankommenden optischen Signale werden durch Mittel aus dem Lichtwellenleiter 9 ausgekoppelt und dem Photodetektor 13 zugeführt. Außerdem sind in der Zentrale 1 Mittel vorhanden, um in bekannter Weise ein zu verteilendes optisches Signal zu erzeugen und in den Lichtwellenleiter 9 einzukoppeln; die erwähnten Mittel sind in Fig. 1 nicht gezeigt.

Neben den in Fig. 1 gezeigten Endstellen 3, 4, die optische Signale zur Zentrale 1 senden und so interaktive Dienste nutzen können, können in einem optischen Übertragungssystem auch solche Endstellen an das Lichtwellenleiternetz 2 angeschlossen sein, die keine interaktiven Dienste nutzen möchten. Im folgenden werden nur die Endstellen 3, 4 betrachtet, die interaktive Dienste nutzen möchten.

Jede Endstelle 3, 4 hat als Lichtquelle einen Laser 5, 7 und eine Modulationseinrichtung 6, 8, die den Laser 5, 7 durch ein Modulationssignal S₁(t), S₂(t) steuert. Der Laser 5, 7 und die Modulationseinrichtung 6, 8 bilden eine in der Endstelle 3, 4 vorhandene optische Sendeeinrichtung. Die Laser 5, 7 senden die optischen Signale wie in der angegebenen Veröffentlichung von T. H. Wood im SCM Verfahren zur Zentrale 1. Das Modulationssignal S₁(t), S₂(t) kann einem Laservorstrom überlagert sein, dessen Wert gleich dem Wert des Schwellenstroms des Lasers 5, 7 ist: Modulationssignal S₁(t), S₂(t) und Laservorstrom bilden in diesem Fall einen den Laser 5, 7 steuernden Laserstrom. Von dem Laser 5, 7 ausgesendetes Licht hat einen Intensitätsverlauf, der dem Modulationssignal S₁(t), S₂(t) entspricht. Außerdem hat jede Endstelle 3, 4 Mittel, um in bekannter Weise das von der Zentrale 1 ausgesendete optische Signal aus dem Lichtwellenleiter 10, 11 auszukoppeln, in ein elektrisches Signal zu wandeln, zu demodulieren und z. B. einem Fernsehgerät zuzuführen; diese Mittel sind in Fig. 1 nicht gezeigt.

Gemäß dem Grundgedanken der Erfindung steuert jede Modulationseinrichtung 6, 8 die Lichtquelle 5, 7 so, daß die Lichtquelle 5, 7 nur innerhalb von aufeinanderfolgenden Zeitintervallen T_{1L}, T_{2L} Licht aussendet, die durch Zeitintervalle T_{1D}, T_{2D} getrennt sind, und daß die Zeitintervalle T_{1L}, T_{2L} kürzer als die Zeitintervalle T_{1D}, T_{2D} sind.

Die Modulationssignale S₁(t), S₂(t) sind demnach so gewählt, daß sie einen periodischen, nicht sinusförmigen zeitlichen Verlauf, einen möglichst großen ersten Fourierkoeffizienten a₁ und einen möglichst kleinen Gleichanteil (Fourierkoeffizient a₀) haben. Das Verhältnis von a₁ zu a₀ wird dadurch maximiert.

In Fig. 2 ist eine schematische Darstellung der Modulationssignale S₁(t), S₂(t) als Funktion der Zeit t gezeigt. Das Modulationssignal S₁(t) der Modulationseinrichtung 6 ist eine Folge von Sinuskuppen, die in aufeinanderfolgenden Zeitintervallen T_{1L} auftreten. Die Zeitintervalle T_{1L} sind durch Zeitintervalle T_{1D} getrennt. Es sind zwei Zeitintervalle T_{1L} (Sinuskuppen) gezeigt, die durch ein Zeitintervall T_{1D} getrennt sind. Die Summe des Zeitintervalls T_{1L} und des Zeitintervalls T_{1D} ist die Periodendauer T_{P1}. Das Modulationssignal S₂(t) der Modulationseinrichtung 8 ist ebenfalls eine Folge von Sinuskuppen, die in aufeinanderfolgenden Zeitintervallen T_{2L} auftreten. Die Zeitintervalle T_{2L} sind durch Zeitintervalle T_{2D} getrennt. Die Summe des Zeitintervalls T_{2L} und des Zeitintervalls T_{2D} ist die Periodendauer T_{P2}. Es sind vier Zeitintervalle T_{2L} (Sinuskuppen) gezeigt, die durch drei Zeitintervalle T_{2D} getrennt sind. In der Zeit, die zwischen dem Auftreten von zwei aufeinanderfolgenden Sinuskuppen vergeht, hat das Modulationssignal S₁(t), S₂(t) den Wert Null, d. h. in dieser Zeit hat der Laserstrom keinen über den Wert des Schwellenstroms hinausgehenden Wert, mit der Folge, daß der Laser 5, 7 kein Licht aussendet.

Für jedes Modulationssignal S₁(t), S₂(t) ist eine Wiederholfrequenz 1/T_{P1}, 1/T_{P2} gegeben, für die im allgemeinen gilt: 1/T_{P1} ≠ 1/T_{P2}. Außerdem gilt: T_{1L}/T_{1D}= T_{2L}/T_{2D}.

Bei den für die Beschreibung gewählten Modulationssignalen S₁(t), S₂(t) beträgt die erzielte Verbesserung des Signal-Rauschleistungsverhältnisses in der Zentrale 1 ca. 6 dB.

Alternativ zu den gezeigten Modulationssignalen S₁(t), S₂(t), bei denen Sinuskuppen verwendet werden, können rampenförmige ("sägezahnförmiger" Verlauf) oder rechteckförmige Verläufe innerhalb der Zeitintervalle T_{1L}, T_{2L} gewählt werden. Es kann aber auch jede andere Kurvenform gewählt werden, die zu einem günstigen Ergebnis führt.

## Patentansprüche

1. Optisches Übertragungssystem, bei dem eine Zentrale (1) durch ein Lichtwellenleiternetz (2) mit einer Anzahl von Endstellen (3, 4) verbunden ist, bei dem jede Endstelle (3, 4) eine Lichtquelle (5, 7) und eine Modulationseinrichtung (6, 8) hat, um optische Signale zur Zentrale (1) senden zu können, bei dem jede Modulationseinrichtung (6, 8) die mit ihr verbundene Lichtquelle (5, 7) durch ein Modulationssignal (S₁(t), S₂(t)) steuert, und bei dem die Zentrale (1) eine Einrichtung (13) hat, um die optischen Signale zu empfangen,
**dadurch gekennzeichnet**, **daß**
jede Modulationseinrichtung (6, 8) die Lichtquelle (5, 7) so steuert, daß die Lichtquelle (5, 7) nur innerhalb von aufeinanderfolgenden ersten Zeitintervallen (T_{1L}, T_{2L}) Licht aussendet, die durch zweite Zeitintervalle (T_{1D}, T_{2D}) getrennt sind, und daß die ersten Zeitintervalle (T_{1L}, T_{2L}) kürzer als die zweiten Zeitintervalle (T_{1D}, T_{2D}) sind.

2. Optische Sendeeinrichtung für Endstellen (3, 4), die in einem optischen Übertragungssystem nach Anspruch 1 vorhanden sind, bei der eine Lichtquelle (5, 7) und eine die Lichtquelle (5, 7) durch ein Modulationssignal (S₁(t), S₂(t)) steuernde Modulationseinrichtung (6, 8) vorhanden sind,
**dadurch gekennzeichnet**, **daß**
die Modulationseinrichtung (6, 8) die Lichtquelle (5, 7) so steuert, daß die Lichtquelle (5, 7) nur innerhalb von aufeinanderfolgenden ersten Zeitintervallen (T_{1L}, T_{2L}) Licht aussendet, die durch zweite Zeitintervalle (T_{1D}, T_{2D}) getrennt sind, und daß die ersten Zeitintervalle (T_{1L}, T_{2L}) kürzer als die zweiten Zeitintervalle (T_{1D}, T_{2D}) sind.

3. Optisches Übertragungssystem nach Anspruch 1 oder optische Sendeeinrichtung nach Anspruch 2,
dadurch gekennzeichnet, daß die Modulationssignale (S₁(t), S₂(t)) in den ersten Zeitintervallen (T_{1L}, T_{2L}) die Form einer Sinuskuppe, einer Rampe oder eines Rechtecks haben.

4. Optisches Übertragungssystem nach Anspruch 3 oder optische Sendeeinrichtung nach Anspruch 3,
dadurch gekennzeichnet, daß für jedes Modulationssignal (S₁(t), S₂(t)) eine Wiederholfrequenz (1/T_{P1}, 1/T_{P2}) festgelegt ist, und daß die Wiederholfrequenzen (1/T_{P1}, 1/T_{P2}) unterschiedlich sind.
